# EUROPEAN PATENT APPLICATION

(11) **EP 3 006 911 A1**
(43) Date of publication of application: **13.04.2016**
(21) Application number: 14804560.2
(22) Date of filing: 29.05.2014
(51) Int. Cl.: G01J 5/00, H04N 5/33

(54) **THERMAL IMAGING DEVICE, ANALYSIS DEVICE AND THERMAL IMAGE PHOTOGRAPHY METHOD AND ANALYSIS METHOD**

(30) Priority: 29.05.2013 CN 201310208188
(71) Applicant: Wang, Hao, Hangzhou, Zhejiang 310013 (CN)
(72) Inventor: Wang, Hao, Hangzhou, Zhejiang 310013 (CN)
(74) Representative: Isarpatent
(86) International application number: PCT/CN2014/078728
(87) International publication number: WO 2014/190913

(57) **Abstract**

This invention provides a thermal imaging device, an analyzing device, a thermal image photographing method, and an analyzing method, relates to a thermal imaging device and application fields of thermal image photographing. The present thermal imaging devices mainly belong to a picture-photographing type. When a photographing button of an infrared photographing device of a picture-photographing mode is pressed, the recorded thermal image document is a thermal image picture document, causing the slower photographing speed and the lower efficiency, failing to measure moving objects and to describe large-scale objects. In the thermal imaging device, the analyzing device, the thermal image photographing method, and the analyzing method in the invention, according to thermal imaging data frames acquired by a photographing part, the acquired thermal imaging data frames are continuously recorded, and the key frame is distinguished from other frames.

## Description

### BACKGROUND OF THE INVENTION

### Field of the Invention

The invention relates to a thermal imaging device and application fields of thermal image photographing and, more particularly, to a thermal imaging device, an analyzing device, a thermal image photographing method, and an analyzing method.

### Description of the Related Art

At present, thermal imaging devices are widely applied in different industry. A publication patent with an application number of 00254441.5 discloses a thermal imaging device in the prior art.

However, the prior art has the following problems during use. At present, the thermal imaging device mainly belongs to a picture-photographing type. When a photographing button of an infrared photographing device of the picture-photographing mode is pressed, the recorded thermal image document is a thermal image picture document. A photographing speed in use is slower, and the efficiency is lower, failing to measure moving objects and to describe large-scale objects.

For a dynamic thermal image document including different objects acquired by dynamic photographing, the prior art does not mention methods for quick analyzing and processing and dynamic photographing devices facilitating quick analysis. When a user needs to know states of objects in the thermal imaging data frame, since the data volume of the dynamic thermal image document is large, the examination and analysis of the thermal image picture document one by one is very inconvenient and with trouble operation.

Therefore, a thermal imaging device, capable of continuously recording the thermal imaging data frames and distinguishing key frames from other frames, further to improve the photographing efficiency, facilitating the subsequent examination and analysis, is needed. Further, a thermal image analyzing device for quickly examining and analyzing the dynamic thermal image document is needed.

### BRIEF SUMMARY OF THE INVENTION

The invention provides a thermal imaging device, an analyzing device, a thermal image photographing method, and an analyzing method, according to thermal imaging data frames continuously acquired by a photographing part, the acquired thermal imaging data frames are continuously recorded to a nonvolatile storage medium, and the key frame is recorded by distinguishing from other frames.

This invention provides a thermal imaging device including:
a photographing part for continuously acquiring thermal imaging data frames;
a display controlling part for controlling to allow a display part to display a dynamic infrared thermal image acquired by the photographed thermal imaging data frame;
a recording part, in response to a dynamic record indication, for continuously recording the acquired infrared data frames, the infrared data frames are the acquired thermal imaging data frames and/or data acquired after specified processing for the acquired thermal imaging data frames;
a mark operating part for performing marking operation;
the recording part, in response to a mark indication generated by the mark operation, for recording by distinguishing the marked infrared data frame from the unmarked infrared data frames.

Further, another thermal imaging device in the invention, includes:
an acquiring part for continuously acquiring thermal imaging data frames;
a recording part, in response to a dynamic record indication, for continuously recording acquired infrared data frames, the infrared data frames are the acquired thermal imaging data frames and/or data acquired after specified processing for the acquired thermal imaging data frames;
a marking part for giving a mark indication;
the recording part, in response to the mark indication, for recording by distinguishing the marked infrared data frame from the unmarked infrared data frames.

An analyzing device includes:
a selecting part for selecting a plurality of thermal imaging data frames;
an analyzing part for analyzing to acquire characteristic data corresponding to specified frames, based on the specified frames in the selected thermal imaging data frames;
a characteristic curve generating part for forming a characteristic curve formed by characteristic points or connected characteristic points in a characteristic curve coordinate system, based on a frame time sequence information and the corresponding characteristic data of the specified frames, and for indicating a position of a marked frame in the characteristic curve coordinate system, based on the frame time sequence information and/or characteristic data of the marked frame in the specified frames.

A thermal image photographing method of a thermal imaging device in the invention includes:
a photographing step for continuously photographing to acquire thermal imaging data frames;
a display controlling step for controlling to allow a display part to display a dynamic infrared thermal image acquired by the photographed thermal imaging data frame;
a recording step, in response to a dynamic record indication, for continuously recording the acquired infrared data frames, the infrared data frames are the acquired thermal imaging data frames and/or data acquired after specified processing for the acquired thermal imaging data frames;
a mark operating step for performing mark operation;
the recording step, in response to a mark indication generated by the mark operation, for recording by distinguishing the marked infrared data frame from the unmarked infrared data frames.

An analyzing method in the invention includes:
a selecting step for selecting a plurality of thermal imaging data frames;
an analyzing step for analyzing to acquire characteristic data corresponding to specified frames, based on the specified frames in the selected thermal imaging data frames;
a characteristic curve generating step for forming a characteristic curve formed by characteristic points or connected characteristic points in a characteristic curve coordinate system, based on a frame time sequence infonnation and the corresponding characteristic data of the specified frames, and for indicating a position of a marked frame in the characteristic curve coordinate system, based on the frame time sequence information and/or characteristic data of the marked frame in the specified frames.

These and other aspects and advantages of the present invention are described with regard to the following description.

### BRIEF DESCRIPTION OF THE DRAWINGS

FIG. 1 is a block diagram showing a thermal imaging device 100 according to a first preferred embodiment of the invention;
FIG. 2 is an outline diagram showing the thermal imaging device 100 in the embodiments;
FIG. 3 is a flow chart of the thermal imaging device in the first embodiment;
FIG. 4 is a flow chart of the thermal imaging device in a second embodiment;
FIG. 5 is a flow chart of the thermal imaging device in a third embodiment;
FIG. 6 is a schematic diagram showing a display interface of an analyzing device in a fourth embodiment;
FIG. 7 is a schematic diagram showing two characteristic curves in one characteristic curve coordinate system;
FIG. 8 is a flow chart of the analyzing device in the fourth embodiment;
FIG. 9 is another schematic diagram showing the display interface of the analyzing device in the fourth embodiment.

### DETAILED DESCRIPTION OF THE INVENTION

The embodiments of the invention are described according to drawings in detail. The embodiments described hereinbelow are used for understanding the invention better and do not limit the scope of the invention, and different modes may be changed in the scope of the invention.

### Embodiment one

Embodiments of the invention are described hereinbelow. In a first embodiment of the invention, a portable thermal imaging device 100 with a thermal image photographing function is as an example of a thermal imaging device. However, in other examples, a processing device continuously receiving thermal imaging data frames, such as a personal computer, a personal digital processing device, or other processing devices, may be as the example of the thermal imaging device.

In the first embodiment, based on thermal imaging data frames acquired by a photographing part 1, the thermal imaging device 100 continuously records the acquired thermal imaging data frames to a non-volatile storage medium, and a recording part may respond to a mark indication during dynamic record or in a dynamic record stopped state, to distinguish the marked thermal imaging data frame from the unmarked thermal imaging data frames.

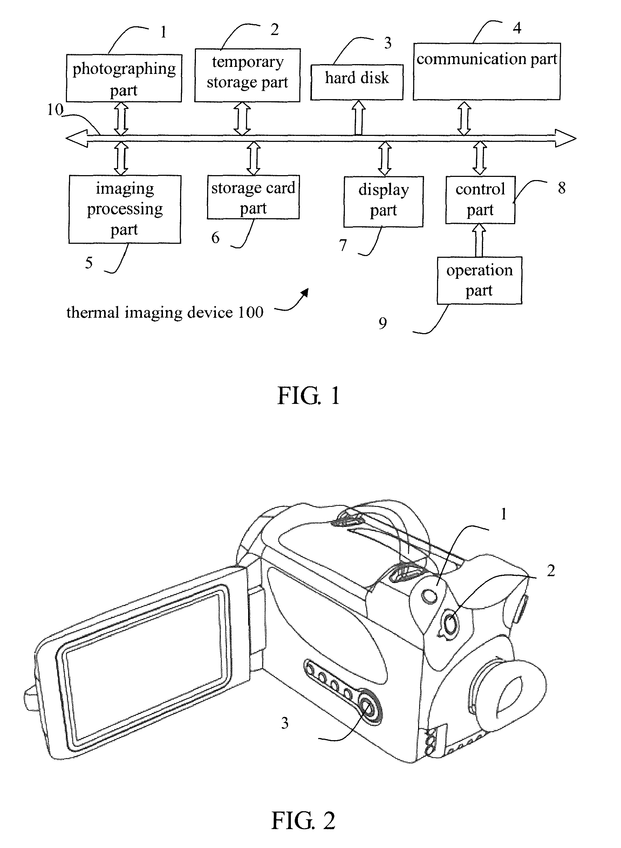

FIG. 1 is a block diagram showing a thermal imaging device 100 according to the first embodiment.

In detail, the thermal imaging device 100 includes a photographing part 1, a temporary storage part 2, a hard disk 3, a communication part 4, a storage card part 6, a display part 7, a CPU 8, and an operation part 9. The control part 8 is connected with the corresponding parts via a control and data bus 10, and is responsible for overall control of the thermal imaging device 100.

The photographing part 1 includes an optical part, a lens driving part, an infrared detector, and a signal preprocessing circuit, which are not shown. The optical part is composed of infrared optical lens, and is used for focusing received infrared radiation on the infrared detector. The lens driving part drives the lenses to perform focusing or zooming operation according to a control signal of the control part 8, and the optical part may also be manually regulated. The infrared detector, such as a refrigerating or non-refrigerated infrared focal plane detector, converts the infrared radiation passing through the optical part to electrical signals. The signal preprocessing circuit, including a sampling circuit, an AD conversion circuit, and a timing trigger circuit, performs signal processing such as sampling the electrical signals output from the infrared detector in a specified period and acquiring digital thermal imaging data frames via the conversion of the AD conversion circuit. The AD value data included by the thermal imaging data frame may be 14-bit or 16-bit binary data. The thermal imaging data frame is not limited to inherent resolution of the infrared detector, or may be lower or greater than the resolution of the infrared detector. In the first embodiment, the photographing part 1 as an example of an acquiring part is used for continuously acquiring the thermal imaging data frames.

In the embodiment, the called thermal imaging data frame may be thermal image AD value data (also called AD value data or AD value). However, the invention is not limited thereto. In other embodiments, the thermal imaging data frame may be image data of infrared thermal images, array data of temperature values, thermal imaging data frames formed by digital signals output from the interior of an infrared detector, or mixed data thereof, or data acquired by mixing and compressing one or more thereof.

The temporary storage part 2, such as a volatile storage i.e. RAM or DRAM, for temporarily storing the photographed thermal imaging data frames, is a buffer storage for temporarily storing the thermal imaging data frames output from the photographing part 1, and based on the control of the control part 8, repeats the following processing, that is, to temporarily store the specified time portions of the acquired thermal imaging data frames and to store the new thermal imaging data frame after deleting the previous frame when the acquiring part (the photographing part 1) acquires the new frame. Meanwhile, the temporary storage part 2 is a working storage of the image processing unit 5 and the control part 8 for temporarily storing the processed data. However, the invention is not limited thereto. A storage or register included by a processor such as the control part 8 or the image processing part 5 may also be defined as a temporary storage part.

The hard disk 3 stores control programs and different data used in different control. In addition, the hard disk 3 is also used for continuously recording the acquired thermal imaging data frames.

The communication part 4 may be a communication device for connecting the thermal imaging device 100 and an external device according to communication specifications such as USB, 1394, or network.

The image processing part 5 is used for performing specified processing for the thermal imaging data frames acquired by the photographing part 1. The processing of the image processing part 5 may be modification, interpolation, pseudo-color, compression, or decompression, which is the processing for converting to the data suitable for display and record. For example, at each time of the displaying fixed time, a specified frame may be read from the thermal imaging data frames with the specified time portions temporarily stored in the temporary storage part 2, and the pseudo-color processing is performed, to acquire the image data of the infrared thermal image. In one embodiment, a corresponding range of a pseudo-color table is determined according to a range of AD values or a setting range of the AD values of the thermal imaging data frames, and the particular color value to which each AD value of the thermal imaging data frame corresponds in the range of the pseudo-color plate is used as the image data of the corresponding pixel position in the infrared thermal image. The image data acquired after pseudo-color by the image processing part 5 is transferred to the temporary storage part 2 that is as a buffer storage. The image processing part 5 may be realized by a DSP, other microprocessors, or a programmable FPGA, or may be a microprocessor integrally formed with the control part 8.

The display part 7 may be a liquid display for displaying the image data stored in the temporary storage part 2. For example, in a photographing standby mode, the infrared thermal images acquired by thermal imaging data frames may be continuously displayed, and in a replay mode, the infrared thermal image generated by the recorded thermal imaging data frames read from the hard disk 3 may be displayed. In addition, different kinds of setting information may also be displayed. However, the invention is not limited thereto. The display part 7 may further be other display devices wiredly or wirelessly connected with the thermal imaging device 100, while the thermal imaging device 100 may not include the display device in itself.

The control part 8 controls the whole action of the thermal imaging device 100. The storage medium such as the hard disk 3 stores the control programs and different data used in different control. A CPU, a MPU, a SOC, or a programmable FPGA may realize the control part 8.

The control part 8 as a recording part is used for continuously recording the acquired thermal imaging data frames in response to a dynamic record indication. In detail, for example, in response to the dynamic record indication, at the moment of the recording fixed time, the thermal imaging data frames to be recorded may be selected from the thermal imaging data frames temporarily stored in the temporary storage part 2, such as the instantly acquired thermal imaging data frames stored in a specified area of the temporary storage part 2, and may be recorded after specified processing such as modification, interpolation, and compression. Preferably, the thermal imaging data frames may be recorded to a nonvolatile storage medium such as the hard disk 3 or a storage card, or may be recorded to other storage mediums communicated with the thermal imaging device 100 via the communication part 4.

Different from visible light photographing, since the thermal imaging data frames acquired by thermal image photographing are mainly for subsequent analysis, to protect the subsequent replay dynamic effects, the record can be performed at a lower frame frequency (usually a record frame frequency of 3-15 frames per second), thus to ensure the dynamic record processing for the large data volume of the thermal imaging data frames and to reduce the load of the processors. Therefore, in one preferred embodiment, in response to the dynamic record indication, the control part 8 as the recording part is used for continuously recording the acquired thermal imaging data frames according to a specified record frame frequency.

Further, the recording part can respond to the mark indication during dynamic record or at the dynamic record stopped state, and can record by distinguishing the marked thermal imaging data frame from the unmarked thermal imaging data frames.

The marked thermal imaging data frame may be the thermal imaging data frame corresponding to the fixed time of the specified record frame frequency, such as, the recorded frame at the moment of the record fixed time before responding to the mark indication, or the frame at the moment of the record fixed time after responding to the mark indication, and at that moment, supposing that one frame may be recorded in 1/6 second (the specified record frame frequency is 6 frames per second), six thermal imaging data frames may be recorded in one second.

Further, the marked thermal imaging data frame is not necessary to the frame corresponding to the record fixed time. There are multiple embodiments. In one example, the thermal imaging data frame to be record or marked may be selected from the temporary storage part 6. For example, when the thermal imaging data frame is recorded according to the specified record frame frequency (supposing that it is 6 frames per second, that is one frame is recorded in 1/6 second), the mark indication may be responded, the instantly photographed thermal imaging data frame may be read from the temporary storage part 6 to be record and marked, while the marked thermal imaging data frame is not the thermal imaging data frame corresponding to the fixed time of the specified record frame frequency. Thus, when the mark key 2 is pressed, seven thermal imaging data frames may be recorded in one second, and one frame may be the marked frame. In another example, in response to the mark indication, the next thermal imaging data frame acquired by photographing may be recorded and marked.

There are multiple embodiments for selecting the thermal imaging data frame to be marked. For example, based on the multiple thermal imaging data frames remained in the temporary storage part 6, the marked frame may be the frame with the maximum temperature value acquired by analysis or the thermal imaging data frame with the least vibration therein. The marked frame may be selected from the thermal imaging data frames remained in the temporary storage part 6 at the moment of responding to the mark operation or after a specified time period of that moment. Preferably, the thermal imaging data frame acquired at the moment of stopping dynamic record and holding the pause indication may be marked. One or more frame may be marked. The marked infrared data frame can be acquired after specified processing for one or more thermal imaging data frame.

The marked thermal imaging data frame is recorded by distinguishing from the unmarked thermal imaging data frames. There are multiple embodiments. The recorded document modes or formats may be different, record may be performed at different areas of the same document, record may be performed at different record mediums, record may be performed at different storage areas of the same storage medium, associated information during recording may be different, corresponding document management information may be different, or processing modes of the thermal imaging data frames may be different (such as different compression).

For example, the marked thermal imaging data frame and the unmarked thermal imaging data frame are recorded in one dynamic thermal image document. In one embodiment, the marked thermal imaging data frame and the unmarked thermal imaging data frame may be associated with distinguishable additional information. In another embodiment, the marked thermal imaging data frame and the unmarked thermal imaging data frame may correspond to different document management information. For example, the mark management information stored in a specified area of the dynamic thermal image document, may include the frame time sequence information of the marked thermal imaging data frame, such as the time of the marked thermal imaging data frame, the frame number of the marked thermal imaging data frame in the dynamic thermal image document, and the specified area such as address of the marked thermal imaging data frame in the dynamic thermal image document, while the content and storage area of the management information of the unmarked thermal imaging data frame are different. In the third embodiment, a management document, including the frame time sequence information of the marked thermal imaging data frame, can be generated additionally, and it may be distinguishable from the management document of the unmarked marked frame, such as by different document extension names.

In addition, the unmarked thermal imaging data frames (or with the marked thermal imaging data frame) may generate a dynamic thermal image document. In addition, the marked thermal imaging data frame may generate a thermal image picture document. For example, a plurality of the marked thermal imaging data frames may generate another dynamic thermal image document with a document extension name different from that of the dynamic thermal image document including the unmarked frames.

According to different application, one or more kinds of the distinguishable way may be configured, to facilitate subsequent examination and analysis.

The control part 8 is used for giving a mark indication. For example, in response to operation that a user presses the mark key, the mark indication may be given. In addition, the mark indication may be given, when the temperature of a thermal imaging data frame exceeding a threshold is analyzed (correspondingly, the thermal imaging device 100 includes a temperature analyzing part and a determining part for determining if the threshold is exceeded), when there is an external triggering signal, or when other specified fixed time is satisfied.

As shown in FIG. 2, the operation part 9 is provided for users to perform different kinds of indication operation, such as record operation (such as a dynamic record key 1), mark operation (such as a mark key 2), and record pause/play operation (such as a pause key 3), or to input setting information such as a specified record frame frequency, and the control part 8 performs the corresponding programs according to the operation signals from the operation part 9. In addition, a display (with a touch screen) or a phonic part (not shown) may be used for realizing the corresponding operation.

After the power is on, based on the control programs and different data used in different control stored in the hard disk 3, the control part 8 controls the whole action of the thermal imaging device 100 and different modes. The interior circuit of the control part 8 is initialized. Then, a standby photographing mode is entered. The photographing part 1 acquires the thermal imaging data frames via continuous photographing, the image processing part 5 performs specified processing for the thermal imaging data frames acquired by the photographing part 1, the thermal imaging data frames are stored in the temporary storage part 2, and the display part 7 displays the instant infrared thermal image.

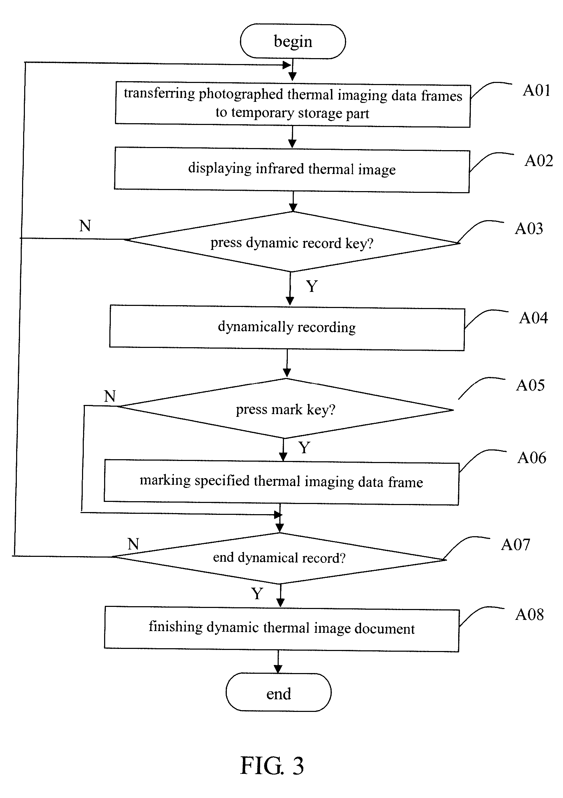

Referring to FIG. 3, the control steps of the thermal imaging device 100 are described.

In step A01, the thermal imaging data frames are acquired, and the thermal imaging data frames acquired by the photographing part 1 are transferred to the temporary storage part 2.

In step A02, the thermal imaging data frames instantly acquired by the photographing part 1 in step A01 are read from the temporary storage part 2 and are displayed after display processing.

In step A03, if there is a dynamic record indication is determined. For example, if the dynamic record key 1 is pressed. If no, return to the step A01 and repeat the above steps, and if yes, perform dynamic record.

In step A04, the dynamic record is performed. That is, the thermal imaging data frames to be recorded, read from the specified area of the temporary storage part 2, may be written to the dynamic thermal image document built in the storage medium. In one preferred embodiment, the recording part may be used for continuously recording the thermal imaging data frames continuously photographed by the photographing part according to the specified record frame frequency, to a nonvolatile storage medium (such as the hard disk 3).

In detail, in one embodiment, at the moment of the specified record fixed time (such as 1/6 second when the record frame frequency is 6 frames per second), the thermal imaging data frame to be recorded may be selected and read from the thermal imaging data frames stored in the temporary storage part 2. For example, the instantly acquired thermal imaging data frames (the newly transferred to the temporary storage part 2) may be read from the specified area of the temporary storage part 2. Then, the specified processing, such as modification, interpolation, cutting, pseudo-color, temperature value conversion, compression, or a combination thereof, may be performed. The specified processing may be omitted. The thermal imaging data frame and/or necessary additional information (such as the time of the thermal imaging data frame, a radiation ratio of photographing, an environment parameter temperature, humidity, a photographing distance, a specified processing algorithm, or parameters related to the processing algorithm) may be written to the dynamic thermal image document built in the storage medium such as the hard disk 3.

In addition, the specified record frame frequency may be extracted. For example, supposing that the frame frequency of the photographed thermal imaging data frames is 30HZ, when the specified record frame frequency is 6 frames per second, the specified record frame frequency may be realized according to a way that one frame is extracted from five frames.

The specified record frame frequency may not be fixed. In one example, the thermal imaging device 100 further includes a record frame frequency control part for automatically self-adaptively controlling the record frame frequency or indicating the users to change the record frame frequency when the record speed fails to achieve the set record frame frequency.

In step A05, if there is a mark indication is determined. If no, jump to step A07, and if yes, for example, a user presses the mark key 2, enter the next step.

In step A06, the mark information is attached to the thermal imaging data frames recorded in the step A04. For example, a data bit "0" as the mark may be attached to the additional information of the recorded thermal imaging data frame. The additional information may be as the head information of the thermal imaging data frame to be written to the thermal imaging data frame. In another way, the mark such as a watermark may be written to the data of the marked frame.

In step A07, if the dynamic record is end is determined.

If end, for example, a user performs operation to end the dynamic record, in step A08, the necessary document additional information (such as an end mark) is written to the dynamic thermal image document, to finish the dynamic thermal image document. If no, return to the step A01. Since the record key 1 is previously pressed, the user can perform multiple mark operation, such as to photograph the thermal images of an object from multiple angles.

In addition, there are multiple attached modes of the mark information different from that in the step A06. The invention is not limited to write the mark information to the thermal imaging data frame. For example, the frame time sequence infonnation of the thermal imaging data frame recorded in the step A04, the frame time sequence information of the marked frame, and the mark identification may be as management information, and in step A08, the management information as one part of the necessary document additional information may be written to the dynamic thermal image document. Otherwise, the index document associated with the dynamic thermal image document may be generated, and the index information includes the frame time sequence information of the marked frame.

According to the above, since users can mark the concerned moment during photographing, the marked frame may be quickly found in the subsequent analysis.

Since the data volume of the thermal imaging data frame is large, to reduce the data volume of the recorded thermal imaging data frame, preferably, the control part 8 may be as a pause controlling part for stopping the dynamic record in response to specified operation (such as pressing the pause key) and continuing the dynamic record at the record stopped state in response to specified operation (such as pressing the pause key again), thus to facilitate the subsequent management and processing of the dynamic thermal image document.

In addition, the size of the dynamic thermal image document may be further specified. If the dynamic thermal image achieves the specified size is determined. If yes, finish the dynamic thermal image document and build a new dynamic thermal image document for recording the subsequently recorded thermal imaging data frames.

### Embodiment two

Different from the first embodiment, in the second embodiment, the thermal imaging device is used for responding to the mark indication and marking the recorded frame at the moment of the record fixed time next to the moment of responding to the mark indication

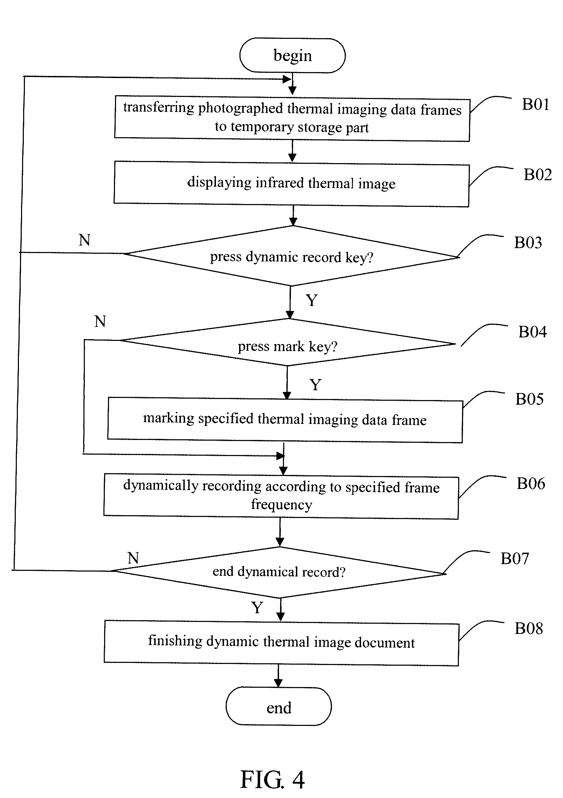

Referring to FIG. 4, the control flows of the thermal imaging device 100 are described.

In step B01, the thermal imaging data frames are acquired, and the thermal imaging data frames acquired by the photographing part 1 are transferred to the temporary storage part 2.

In step B02, the thermal imaging data frames instantly acquired by the photographing part 1 are read from the temporary storage part 2 and are displayed after display processing.

In step B03, if there is a dynamic record indication is determined (for example, if the dynamic record key 1 is pressed). If no, return to step B01 and repeat the above steps, and if yes, perform the next step.

In step B04, if there is a mark indication is determined. If yes (for example, a user presses the mark key 2), enter the next step, and if no, jump to step B06.

In step B05, at the moment of the specified record fixed time (such as 1/6 second when the record frame frequency is 6 frames per second), the thermal imaging data frames to be recorded may be selected and read from the thermal imaging data frames stored in the temporary storage part 2. For example, the newly acquired thermal imaging data frames may be read from the specified area of the temporary storage part 2. Then, the specified processing, such as modification, interpolation, cutting, compression, or a combination thereof, may be performed. The specified processing may be omitted. The thermal imaging data frames and the additional information related to the mark may be written to the dynamic thermal image document built in the storage medium such as the hard disk 3. Then, step B07 is performed.

In addition, whether the specified record fixed time reaches is not determined, in response to the mark indication, the thermal imaging data frames to be recorded may be selected and read from the thermal imaging data frames stored in the temporary storage part 2, such as reading the newly acquired thermal imaging data frames from the specified area of the temporary storage part 2, and the thermal imaging data frames and the additional information related to the mark may be written to the dynamic thermal image document built in the storage medium such as the hard disk 3. Then, the timing of the specified record frame frequency may be restarted. The next step is entered.

In step B06, the dynamic record is performed according to a specified frame frequency.

In step B07, if end is determined.

If the dynamic record is end, in step B08, the necessary document additional information and an end mark is written to the dynamic thermal image document, to finish the dynamic thermal image document.

### Embodiment three

Different from the first and second embodiment, in the third embodiment, the thermal imaging device is used for stopping the dynamic record to hold the specified thermal imaging data frame in response to the mark indication and for marking and recording the specified thermal imaging data frame (such as the held thermal imaging data frame) after determination and recovering the dynamic record.

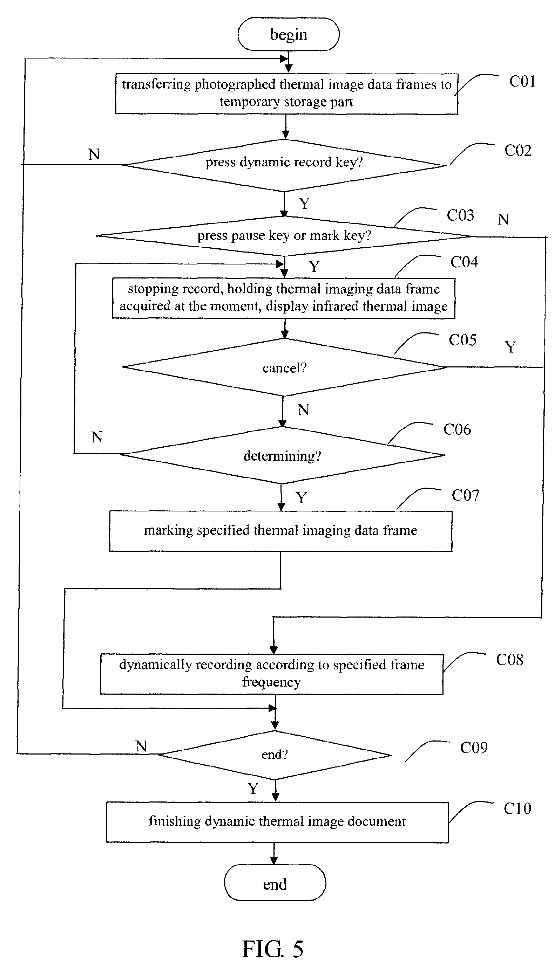

Referring to FIG. 5, the control flows of the thermal imaging device 100 are described.

In step C01, the thermal imaging data frames are acquired, and the thermal imaging data frames acquired by the photographing part 1 are transferred to the temporary storage part 2. Then, the thermal imaging data frames instantly acquired by the photographing part 1 are read from the temporary storage part 2 and are displayed after display processing.

In step C02, if there is a dynamic record indication is determined. For example, if the dynamic record key 1 is pressed. If no, return to the step C01 and repeat the above steps, and if yes, perform the next step.

In step C03, if there is a pause indication is determined. If yes, for example, a user presses the mark key 2 (configured for giving a pause indication), perform the next step, and if no, jump to step C08, perform the dynamic record for the thermal imaging data frame according to the specified record frame frequency.

In step C04, the control part 8 controls to stop the dynamic record, to hold the thermal imaging data frame acquired at the moment of responding the operation to the specified area of the temporary storage part, and to display the infrared thermal image acquired by the held thermal imaging data frame on the display part in a frozen mode.

In addition, the dynamic record may not be stopped, and the infrared thermal image of the held thermal imaging data frame and the dynamic infrared thermal image may be displayed on the display part together. Otherwise, the dynamic record may be stopped, and the infrared thermal image of the held thermal imaging data frame and the dynamic infrared thermal image may be displayed on the display part together.

In steps C05-C06, a user can determine the image quality of the displayed infrared thermal image. If determined, in step C07, the specified thermal imaging data frame is marked and recorded. For example, the held thermal imaging data frame may be recorded to the dynamic thermal image document in the hard disk 3 after attaching the marking information. If cancelled, perform step C08.

In step C08, the dynamic record is performed, for example, according to a specified frame frequency.

In step C09, if end is determined.

If end, in step C10, the necessary document additional information and an end mark is written to the dynamic thermal image document, to finish the dynamic thermal image document.

Obviously, in the embodiment, after determination of users, the marked thermal imaging data frame is recorded, thereby improving the quality of the marked thermal imaging data frame. The deformation of this embodiment is that a user gives the pause indication (such as pressing the pause key 3), and performs the mark operation (such as pressing the mark key 2) when satisfying the image, thus to mark and record.

### Embodiment four

For the dynamic thermal image document acquired by photographing, since the data volume is very large (thousands of frames), if the analyzing method for the thermal image picture document in the prior art is used, the user needs to select the single thermal image picture document for analysis one by one, which wastes time and energy. In the fourth embodiment, the thermal imaging device 100 for processing the dynamic thermal image document is as an example of an analyzing device, while a thermal image analyzing device with or without the thermal image photographing function, such as a personal computer or a personal digital processing device, may be taken for example.

The control part 8 performs control related to analysis. The control part 8 as a selecting part selects the thermal imaging data frames to be processed, for example, selects the thermal image document from the storage medium such as the storage card part 6 or the hard disk 3, to acquire the thermal imaging data frames to be processed. A plurality of thermal image picture documents (each thermal image picture document includes one thermal imaging data frame), one or more dynamic thermal image document, or one thermal image picture document and one or more dynamic thermal image document may be selected. In addition, the control part 8 can acquire the thermal imaging data frames from an external device wiredly or wirelessly connected the thermal imaging device via the communication part 4.

The control part 8 as a filtering part is used for filtering the selected thermal imaging data frames according to a specified filter condition, to acquire the specified frames related to the generation of a characteristic curve. The filter condition may include a sampling frame amount, a sampling interval, all thermal image picture documents, frame additional information or associated information, a marked thermal imaging data frame, characteristic data, or a combination thereof, for filtering the thermal imaging data frames included in the selected thermal image document, to acquired the specified frames.

The total frame amount of the thermal imaging data frames included in the selected thermal image document maybe displayed, and then the frame amount to be analyzed therein is selected, for example, to distribute the specified frames to be analyzed according to a specified rule. In one example, the total frame amount of the thermal imaging data frames included in the selected thermal image document is 100, and then according to the determined time sequence of these frames and the sampling frame amount of 50, one frame is extracted from each two frames according to the time sequence, thus to acquire the specified frames to be analyzed.

The sampling interval may be to extract one frame from multiple frames, for example, to extract one frame from ten frames according to the frame time sequence information. The time sequence of these selected frames may be determined before extraction. The sampling interval may be a frame interval or a time interval.

The frame additional information or associated information may be time attached to the thermal imaging data frame, the attached photographing parameter (such as the environment temperature, a distance, or a wind speed), the attached equipment name, the attached GPS information, the attached characteristic data, the mark information of the marked frame, or a combination thereof. According to the filter condition including the above information, the thermal imaging data frames included in the selected thermal image document are filtered, thus to acquire the characteristic curve under a specified condition. Preferably, the time sequence acquired according to a specified rule of the specified frames may be determined after filtering.

The characteristic data may be used for analyzing the thermal imaging data frames included in the selected thermal image document, and the filtering is performed according to the analyzed resulted after analysis. Further, the analysis processing for acquiring the characteristic data for filtering may be the same or different from that for acquiring the characteristic data for subsequently generating the characteristic curve. For example, the maximum temperature acquired by analyzing the thermal imaging data frames exceeds 80 degrees may be as the filter condition, and the thermal imaging data frames with the maximum temperature lower than 80 degrees may be filtered out.

The filter may be performed for the thermal imaging data frames included in the selected thermal image document, thus to reduce the load of the processor during the subsequent analysis, to improve the analysis speed, to facilitate users to acquire the characteristic data of the thermal image document to be analyzed according to wishes, to reduce the density of the curve characteristic points, to facilitate examination. Obviously, the filter may not be performed.

The control part 8 as an analyzing part is used for analyzing the specified frames in the selected thermal imaging data frames according to a specified characteristic analyzing condition, to acquire the characteristic data. When there are multiple characteristic analyzing conditions, multiple groups of the characteristic data respectively corresponding to the multiple characteristic analyzing conditions may be acquired by analysis. The specified frames may be all of the thermal imaging data frames included in the selected thermal image document, or may be the specified frames determined according to the filter condition from the thermal image document. Preferably, the specified frames at least include the marked thermal imaging data frame and/or the thermal image picture document.

The analyzing part is described by an example of temperature analysis. In the fourth embodiment, the characteristic data is a temperature value acquired by temperature analysis, the temperature value may be the maximum temperature, the average temperature, or the minimum temperature based on the characteristic analyzing condition such as in the specified analyzing area, or may be the temperature difference value based on the characteristic analyzing condition such as in different analyzing areas.

The characteristic analyzing condition may be an analyzing area and an analyzing mode related to analysis. The analyzing part performs the analysis based on the analyzing area and the analyzing mode determined by the characteristic analyzing condition. The analyzing area represents a specified analyzing area in the thermal imaging data frame, such as points, lines, or planes, or the whole thermal imaging data frame may be as the analyzing area. The analyzing mode may be to calculate the maximum temperature, the minimum temperature, and the average temperature of an analyzing area, or the temperature difference between different analyzing areas. The analyzing area and analyzing modes determined by the characteristic analyzing condition may be preset or defaulted. In other embodiments, the analyzing area and analyzing mode may be automatically set according to the characteristic analyzing condition. For example, the characteristic analyzing condition may be that according to the pixel with the maximum temperature in the thermal imaging data frame as a center point, a case with a specified dimension as the analyzing area is automatically set, and the average temperature of the case is calculated, thereby automatically setting the analyzing area and the analyzing mode in the thermal imaging data frame.

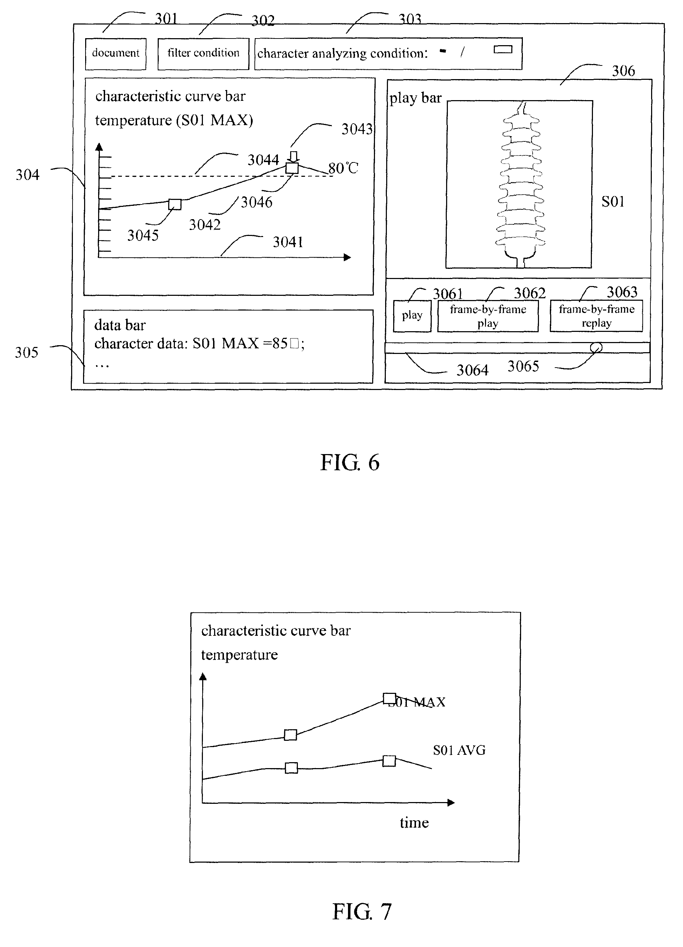

In one embodiment, the analyzing part may perform specified processing, such as modification or interpolation for the analyzed thermal imaging data frame, may extract the thermal image data determined by the analyzing area based on the specified analyzing area, may perform conversion of the temperature value to acquire the temperature values to which the thermal image data corresponds, and then may analyze and calculate the acquired temperature values according to the analyzing mode. An analyzing area S01 in FIG. 6 and the calculation of S01 MAX is taken for example, the temperature conversion and analysis may be performed for the thermal image data in the analyzing area S01, to acquire the maximum temperature value.

The above example does not limit the embodiments of analysis. For example, the temperature value conversion for the thermal image data in the analyzing area may be that all thermal image data in the analyzing area may be converted to temperature values, the specified part of the thermal image data may be converted to temperature values, or according to different modes, such as calculation of the maximum, minimum, average temperature in the analyzing mode, the conversion of the thermal image data may be determined for one part or whole of the thermal image data in the analyzing area. For example, when the analyzing mode is to calculate the maximum temperature in the analyzing area, for the thermal image data in the analyzing area, the thermal image data AD values are first compared, and the maximum AD value therein is converted to the temperature value, instead of converting all of AD values of the thermal image data pixels in the analyzing area to temperature values. The thermal image data is converted to the temperature values by specified processing. For example, the temperature values may be acquired via a specified converting formula, according to set radiation parameters of objects, the environment temperature, the humidity, the additional distance during photographing, and converting parameters between the AD values of the thermal image data and the temperature.

The invention is not limited to that the temperature value characteristic data is acquired according to the analyzing area in the above example. The characteristic data of the thermal image analysis may include different kinds according to different application occasions, it is not limited to the temperature value, and it may be a percentage of specified temperature values in the pixel array of the thermal imaging data frames. The characteristic data may be acquired based on the AD values of the thermal imaging data frames, gray values, pseudo-color values, the AD value may be converted to a radiation energy value, a gray value, a radiation ration value, or a color value, for analysis, or according to the specified matching character (such as templates), the similarity value may be acquired. In addition, the analysis may be acquired based on the additional information in the thermal imaging data frame. For example, the thermal imaging data frame may attach the specified temperature value in itself, and the attached information may be as the characteristic data acquired by analysis. Further, the characteristic data is not limited to the analysis value of the same thermal imaging data frame or may be the analysis value based on the multiple thermal imaging data frames.

The control part 8 as a characteristic curve generating part is used for forming a characteristic curve composed of characteristic points or connected characteristic points in a characteristic curve coordinate system, based on the frame time sequence information of the specified frames and the characteristic data acquired by analyzing the specified frames.

When there are multiple characteristic analyzing conditions, the analyzing part acquires multiple groups of the characteristic data corresponding to the multiple characteristic analyzing conditions, in the characteristic curve coordinate system, the multiple characteristic curves (two characteristic curve acquired by the characteristic analyzing conditions S01 MAX and S01 AVG in FIG. 7) may be formed, and each characteristic curve includes the characteristic points in the same group or the characteristic points in the same group connected with each other. In another example, based on the multiple characteristic curve coordinate systems, in each characteristic curve coordinate system, one characteristic curve including the connected characteristic points in the same group may be formed, or the multiple characteristic curves respectively including the connected characteristic points in the same group may be formed.

Preferably, when there are multiple characteristic curves formed by multiple groups of the characteristic points, respectively, in one coordinate system, the characteristic curves formed by the characteristic points acquired by different characteristic analyzing conditions may be displayed in different modes such as different colors or line types, to avoid mixing characteristic points in different groups acquired by the different characteristic analyzing conditions.

As the specified amount of the specified frames is analyzed in turn, such as to analyze the acquired characteristic data and the frame time sequence infonnation of the specified frame by frames, the characteristic curve may be generated in the coordinate system in turn. Otherwise, the characteristic data may be acquired after all of the specified frames are analyzed, and according to the frame time sequence information of the specified frames, the characteristic curve may be generated in the coordinate system in one time.

The y-coordinate of the coordinate system may represent a ruler of the characteristic data, and the x-coordinate may represent the frame time sequence infonnation of the analyzed thermal imaging data frame, such as a frame number or time. The characteristic values of the y-coordinate, the values of the x-coordinate, and a threshold line (when the characteristic data exceeds the threshold line, the object in the exceeding portion of the thermal imaging data frame may have defects) may not be displayed, and the generation and display of the y-coordinate and the x-coordinate may be omitted, which may also be displayed.

Further, the characteristic values of the y-coordinate and x-coordinate may be preset or self-adapted. In one example of self-adaption, the characteristic values of the x-coordinate may be determined according to the frame time sequence of the selected thermal imaging data frames, and the characteristic values of the y-coordinate may be determined according to a value range of the characteristic data acquired by analyzing the specified frames in the selected thermal imaging data frames. Obviously, there are different modes of configuration of the y-coordinate and the x-coordinate. For example, they may be exchanged. The sequence and range of the time sequence of the x-coordinate may be determined according to the frame time sequence of all thermal imaging data frames included in the selected thermal image document or the frame time sequence of the specified thermal imaging data frames acquired after filtering.

Preferably, based on the frame time sequence information of the marked thermal imaging data frame (and/or the thermal image picture document) in the specified frames and the corresponding characteristic data, the identification of the mark is displayed on the characteristic curve, such as an identification 3045 in FIG. 6, which is very visualized.

The control part 8 as a curve display controlling part is used for allowing the display part to display the characteristic curve. The curve display controlling part can control a display range (such as displaying part or whole of the characteristic curve), a curve color, a curve partial color, twinkle, or scaled display. Preferably, the characteristic curve coordinate system is further displayed. There are multiple display modes of the characteristic curve coordinate system. For example, the characteristic curve coordinate system may not be displayed in the mode as shown in FIG. 3, and only the characteristic curve and upper and lower limit values of the characteristic data may be displayed. In addition, one or more threshold line (such as a threshold line 3044 in FIG. 7) may be further displayed, convenient for users to understand. The threshold line satisfying the industry specification may be preset.

The control part 8 as a characteristic cursor display controlling part for displaying a characteristic cursor on the characteristic curve, the x-coordinate of the coordinate system, the y-coordinate of the coordinate system, or a combination thereof. Preferably, the characteristic cursor may be displayed on the characteristic curve. The characteristic cursor display controlling part displays the characteristic cursor at the located position based on the locating operation of the characteristic cursor. The locating operation of the characteristic cursor may be that to select the characteristic cursor via the operation part 9 to allow the characteristic cursor to move, to operate the play cursor, or to input specified characteristic data. The characteristic cursor may be a line cursor, at that moment, which may be indicated at the corresponding position on the characteristic curve and the x-coordinate of the coordinate system.

The control part 8 as an information display controlling part is used for allowing the display part to display the information related to the thermal imaging data frame to which the characteristic cursor position corresponds, such as the characteristic data related to the thermal imaging data frame to which the characteristic cursor position corresponds. The characteristic data may be acquired according to the frame time sequence information to which the characteristic cursor position corresponds and may be displayed. And/or, the control part 8 is used for allowing the display part to display the infrared thermal image acquired by the thermal imaging data frame to which the characteristic cursor position corresponds. For example, according to the frame time sequence information to which the characteristic cursor position corresponds, the corresponding thermal imaging data frame may be determined to acquire the infrared thermal image which may be displayed.

Referring to FIG. 6, an example of a display interface of the thermal imaging device 100 in the third embodiment is described.

A document 301 menu option is used for selecting a dynamic thermal image document to be analyzed from the storage medium such as the hard disk 5.

A filter condition 302 menu option is used for setting the filter condition of the thermal imaging data frames related to the generation of the characteristic curve.

A characteristic analyzing condition 303 menu option is used for setting the characteristic analyzing condition related to the generation of the characteristic curve. The characteristic analyzing condition may include an analyzing area (such as points, lines, or planes) and an analyzing mode corresponding to the analyzing area, such as the characteristic analyzing condition S01MAX, S01AVG (the average temperature in S01) based on the analyzing area S01. Obviously, one or more characteristic analyzing condition may be set.

A characteristic curve bar 304 is used for displaying a coordinate system 3041 of a characteristic curve, a characteristic curve 3042, a characteristic cursor 3043, a threshold line 3044, and a mark 3045. The y-coordinate of the coordinate system 3041 may represent a ruler of the characteristic data, and the x-coordinate may represent the frame time sequence information of the analyzed thermal imaging data frame, such as the frame number and time. The characteristic values of the y-coordinate and x-coordinate may be displayed or not.

The characteristic cursor 3043 is provided for users to adjust or set the position of the characteristic cursor, correspondingly to control the data bar and/or the play bar to change the display. That is, the data bar 305 displays the characteristic data of the thermal imaging data frame to which the characteristic cursor position corresponds, or the characteristic data of the thermal imaging data frame to which the characteristic cursor position corresponds may be displayed in adjacent to the characteristic cursor 3043. The play bar 306 displays the infrared thermal image to which the position of the characteristic cursor 3043 located at the characteristic curve 3042 corresponds.

The characteristic cursor is not limited to be displayed on the characteristic curve, and may be displayed on the characteristic curve, the x-coordinate of the coordinate system, the y-coordinate of the coordinate system, or a combination thereof.

A threshold line 3044 is used for displaying a threshold (such as 80 □) of temperature, for reminding the users.

Marks 3045, 3046 are used for indicating the position of the marked frame. The mark is not limited to be displayed on the characteristic curve and may also be displayed on the x-coordinate or y-coordinate of the coordinate system.

A data bar 305 is used for displaying the information related to the selected thermal imaging data frame and/or the infonnation related to the thermal imaging data frame to which the characteristic cursor 3043 corresponds. The information related to the thermal imaging data frame to which the characteristic cursor 3043 corresponds may also be displayed at other specified positions of the display part, preferably, in adjacent to the characteristic cursor 3043, such as at the upper side of the cursor, thus to be convenient for the users to examine. The related information may be character information, such as the associated infonnation of the thermal imaging data frame, the characteristic data acquired by analyzing the thermal imaging data frame, and other analysis data.

A play bar 306 is used for displaying the infrared thermal image acquired by the selected thermal imaging data frames (or the thermal imaging data frames after filtering). Preferably, the display of the infrared thermal image acquired by the thermal imaging data frames included in the selected thermal image document may be configured. In another embodiment, the display of the infrared thermal image acquired by the filtered thermal imaging data frames may be configured.

Play 3061 is used for determining the play and includes menu options, such as a pause option, which is not shown, for controlling the play.

Frame-by-frame play 3062 is used for determining to play forwards frame by frame.

Frame-by-frame replay 3063 is used for determining to play backwards frame by frame.

A progress bar ruler 3064 is used for displaying a ruler of the selected thermal imaging data frames, and may further display the frame time sequence information such as the frame amount. Obviously, the mark may be displayed corresponding to the progress bar ruler 3064, which is not limited to be displayed on the characteristic curve. The mark is displayed in the play bar, which may be convenient for users to examine the marked thermal imaging data frame and to examine the thermal imaging data frames before and after the marked thermal imaging data frame.

A play cursor 3065 is used for displaying the progress of the currently displayed thermal imaging data frame in the play sequence, and may further display the frame time sequence information of the currently displayed thermal image, such as a frame number and time.

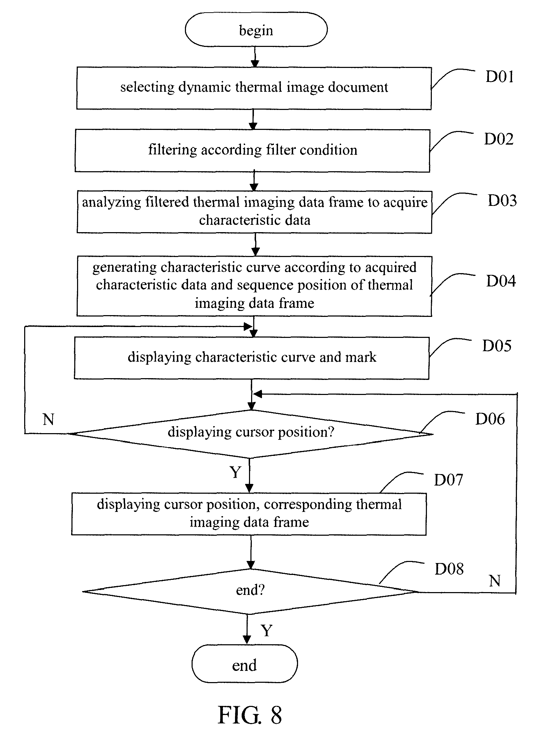

Referring to FIG. 8, the control flows of this embodiment are described.

In step D01, a dynamic thermal image document to be processed is selected. For example, via the operation of the document 301, one or more dynamic thermal image document may be determined, or one or more folder including the above document may be selected.

In step D02, filtering is performed according to a specified filter condition.

According to the specified filter condition, the thermal imaging data frames included in the selected thermal image document are filtered, to acquire the specified frames. A user can preset the filter condition via the filter condition 302, such as remaining all marked frames.

In step D03, the thermal imaging data frames after filtering, are analyzed to acquire the characteristic data.

A user may preset a characteristic analyzing condition (such as a specified analyzing area and analyzing mode) for analysis. In the embodiment, the user may preset the analyzing area S01 and the maximum temperature calculation of S01 as the characteristic analyzing condition.

In step D04, based on the frame time sequence information of the specified frames and the corresponding characteristic data (S01MAX), in the characteristic curve coordinate system, a characteristic curve formed by characteristic points or connected characteristic points is formed. Based on the frame time sequence information and/or characteristic data of the marked frame in the specified frames, the position of the marked frame is indicated in the characteristic curve coordinate system. The frame time sequence information may be a frame number and time of the thermal imaging data frame located in the dynamic thermal image document, or may be a sequence number acquired according to a sequence ruler.

In step D05, the characteristic curve is displayed, such as a characteristic curve 3042 and mark identifications 3045, 3046 of the marked frames as shown in FIG. 7.

In step D06, if there is a characteristic cursor displaying indication is determined. When a user moves a cursor to the characteristic curve bar via the operation part, the characteristic cursor to which the cursor position corresponds is displayed. In addition, the characteristic cursor at a specified position may be automatically displayed, such as the position corresponding to the maximum value of the S01 MAX curve.

In step D07, once the display of the characteristic cursor is determined, according to the frame time sequence position to which the characteristic cursor 3043 corresponds, the control part 8 determines the corresponding thermal imaging data frame to acquire the characteristic data and the infrared thermal image, such as the position of the mark 3046 to which the characteristic cursor 3043 corresponds, "S01 MAX =85 □" displayed in the data bar 305, and the infrared thermal image displayed in the play bar 306 in FIG. 6.

A user can move the position of the characteristic cursor 3043 via the operation part 9, correspondingly, the data displayed in the data bar 305 and the infrared thermal image displayed in the play bar 306 may change according to the frame time sequence position of the thermal imaging data frame pointed by the characteristic cursor 3043. Preferably, the movement of the characteristic cursor may be limited to between the marked frames.

Obviously, the user can make further analysis for the infrared thermal image in FIG. 7, such as setting more detailed analyzing areas for analysis.

Further, the user may control to play the adjacent frames one by one in the play bar 306, to determine if there is the thermal imaging data frame with the higher temperature in the thermal imaging data frames that are filtered out. For example, the dynamic thermal image document may be selected, and during dynamic photographing, the multiple thermal imaging data frames of the high temperature points may be photographed. After the position of characteristic cursor 3043 is located as shown in FIG. 6, the play cursor 3065 may locate to the corresponding frame time sequence position. At that moment, the adjacent frames played one by one may be the thermal imaging data frames with the adjacent time sequence of the infrared thermal image displayed in FIG. 6 in the data stream document. Thus, it is convenient for searching if there is the thermal imaging data frame with the higher temperature in the thermal imaging data frames that are filtered out, before or after the marked frame, or for examining other angles in the dynamic photographing.

In one preferred mode, the characteristic cursor 3043 may move with the play cursor 3065 to point to the corresponding position of the characteristic curve. When the displayed infrared thermal image pointed by the play cursor 3065 is not used for analyzing to acquire the characteristic data, the corresponding position of the thermal imaging data frame related to analysis which is with the nearest time sequence to the above infrared thermal image on the characteristic curve may be as the position of the characteristic cursor 3043, for representing the corresponding position of the currently displayed infrared thermal image on the characteristic curve.

According to the above, as the characteristic curve is generated, the processing quality of the dynamic thermal image document can be protected, the processing speed can be improved, and the workload of examination and analysis for each frame can be reduced. As the filter condition is set, the processing speed can be improved, the position of the key marked frame is visualized, and the play of the marked frame is convenient, further to enhance of the pertinence of the characteristic curve. As the mark and the characteristic cursor are set on the curve, the examination of the users may be convenient, and the frames with the researching values can be quickly found from the tremendous amount of the thermal imaging data frames.

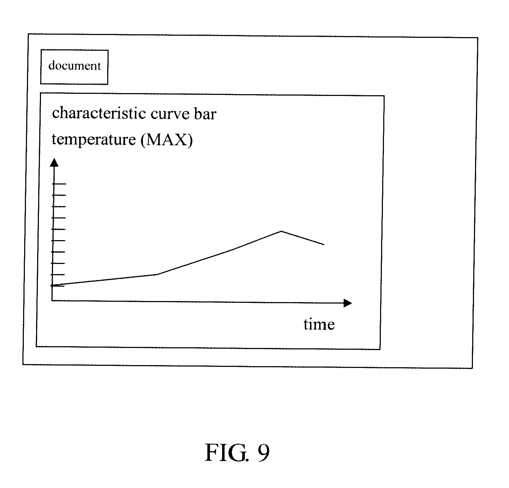

Further, the filer condition is not necessary. The step D02 may be omitted. At the condition of quickly browsing the characteristic curve, the operation of the characteristic cursor is not necessary. Therefore, the steps D06-D08 may be omitted, and the identification of the mark may not be displayed. Thereby, the control part 8 may not be used as the characteristic cursor display controlling part and the information display controlling part. A display interface of a simplified characteristic curve may be as shown in FIG. 9.

Other modifications and changes for the embodiments may be made in the script of the invention, and the modifications in the scope of the claims may be as one part of the invention. For example, when the thermal imaging device in the invention is as one part of the thermal imaging device 13, the display controlling part may be removed.

The analysis and examination of the dynamic thermal image document by the thermal imaging device 100 may be performed without the generation of the characteristic curve and may be performed by the display and analysis of the extracted marked thermal imaging data frame. For example, the content of the play bar 306 in FIG. 6 and the mark at the process bar 3046 may be only displayed.

An analyzing device includes a selecting part for selecting a dynamic thermal image document, an extracting part for extracting the marked (or other filter condition, or specified marks) thermal imaging data frame in the dynamic thermal image document, and a display controlling part for displaying the marked thermal imaging data frame.

### Other embodiments

In addition, when the thermal imaging device includes a second acquiring part for acquiring other images. The recording part is used for associating other images such as the visible light with the marked thermal imaging data frame and recording the association. Thus, the subsequent examination and analysis is convenient.

The embodiments are only examples, and the invention is not limited. The structure and operation in the above embodiment may be changed according to needs. Further, this invention also includes that as one part or one functional module of a thermal imaging device or a thermal image processing device with the photographing function.

The above embodiment is described according to a certain step sequence. However, according to different embodiments, the sequence may be different, and it is not limited to the above embodiment. For example, when one or more of the control part and the image processing part includes a plurality of processors, there may be the parallel processing suitable for part steps.

In preferred embodiments, the additional infonnation of the unmarked thermal imaging data frames and the additional information of the marked frame may be associated with the frame time sequence of the corresponding frame, may be temporarily stored in the temporary storage part, and may be written to the dynamic thermal image document at once when the dynamic record is end, thereby convenient for the subsequent quick search.

The dynamic record is not limited to generate the dynamic thermal image document. In one example, the continuously recorded thermal imaging data frames may generate one thermal image picture document including a thermal imaging data frame and the related additional information, respectively, and may be stored to a specified folder in which the document extension name of the marked frame is different from that of other frames.

Persons having ordinary skill in the art may change the processing sequence without departing from the spirit of the invention, and the changes all belong to the scope of the invention.

Further, the invention may be realized by a computer (or a device such as a CPU, MPU) of a system or equipment executing the function of the embodiment by executing programs recorded on the storage device, and may be realized by a computer of a system or equipment executing the function of the embodiment by reading and executing the programs recorded on the storage device according to the steps. For this objective, the program may be provided to the computer via network or from a record medium (such as a computer readable medium) of different types that is as a storage device.

The invention provides a computer program, and the digital signals composed by the computer program are recorded to a computer readable record medium, such as a hard disk, and a memory. The program is executed to perform the following steps:
a selecting part for selecting a plurality of thermal imaging data frames,;
an analyzing part for analyzing to acquire the characteristic data corresponding to the specified frames, based on the specified frames in the selected thermal imaging data frames;
a characteristic curve generating part for forming a characteristic curve formed by characteristic points or connected characteristic points in a characteristic curve coordinate system, based on a frame time sequence information and the corresponding characteristic data of the specified frames, and for indicating a position of a marked frame in the characteristic curve coordinate system, based on the frame time sequence information and/or characteristic data of the marked frame in the specified frames.

This embodiment of the invention further provides a readable storage medium for storing a computer program for electronic data exchange. The computer program allows the computer in the thermal imaging device to perform the following steps:
a photographing step for continuously photographing to acquire the thermal imaging data frames;
a recording step, in response to a dynamic record indication, for continuously recording the acquired infrared data frames, the infrared data frames are the acquired thermal imaging data frames and/or data acquired after specified processing for the acquired thermal imaging data frames;
a mark operating step for performing mark operation;
the recording step, in response to a mark indication generated by the mark operation, for recording by distinguishing the marked infrared data frame from the unmarked infrared data frames.

Although the function block in the drawings may be realized via hardware, software, or the combination thereof, the structure for realizing the function block may not be set in a one-for-one mode. For example, multiple function blocks may be realized via one software or hardware unit, or one function block may be realized via multiple software or hardware units. In addition, the processing and control function of part or all elements in the embodiments of the invention may be realized via special-use circuits, general processors, or programmable FPGA.

In addition, this embodiment is taken for example at a scene of object application in power industry, and it also can be widely applied to different infrared detection industry.

The above description is only the embodiments of the invention, and the exemplary description is not for limiting the substantive contents of the invention. Persons having ordinary skill in the art may make other modifications and changes without departing from the substance and scope of the invention after reading the description. Persons having ordinary skill in the art may make other modifications and changes without departing from the spirit of the invention, and the modifications in the scope of the claims may be as one part of the invention.

## Claims

1. A thermal imaging device comprising:
a photographing part for continuously photographing to acquire thermal imaging data frames;
a display controlling part for controlling to allow a display part to display a dynamic infrared thermal image acquired by the photographed thermal imaging data frame;
a recording part, in response to a dynamic record indication, for continuously recording the acquired infrared data frames, the infrared data frames being the acquired thermal imaging data frames and/or data acquired after specified processing for the acquired thermal imaging data frames;
a mark operating part for performing mark operation;
the recording part, in response to a mark indication generated by the mark operation, for recording by distinguishing the marked infrared data frame from the unmarked infrared data frames.

2. A thermal imaging device comprising:
an acquiring part for continuously acquiring thermal imaging data frames;
a recording part, in response to a dynamic record indication, for continuously recording acquired infrared data frames, the infrared data frames being the acquired thermal imaging data frames and/or data acquired after specified processing for the acquired thermal imaging data frames;
a marking part for giving a mark indication;
the recording part, in response to the mark indication, for recording by distinguishing the marked infrared data frame from the unmarked infrared data frames.

3. The thermal imaging device according to claim 1 or 2, wherein the recording part continuously records the infrared data frames according to a specified record frame frequency.

4. The thermal imaging device according to claim 1 or 2, wherein the marked thermal imaging data frame is recorded to be distinguished from the unmarked thermal imaging data frames by one or more of the following ways:
1) documents with different formats; 2) different additional information; 3) different processing modes; 4) different index information or management information; 5) different storage areas; 6) documents with different document names or document extension names; 7) different storage areas of the additional information.

5. The thermal imaging device according to claim 1 or 2, wherein the recording part records the marked infrared data frame and the unmarked infrared data frames in one dynamic thermal image document.

6. The thermal imaging device according to claim 1 or 2, wherein the recording part records the marked multiple infrared data frames to another dynamic thermal image document.

7. The thermal imaging device according to claim 1 or 2, wherein the recording part records one marked infrared data frame to one thermal image picture document.

8. The thermal imaging device according to claim 1 or 2, wherein the recording part is used for stopping dynamic record in response to a pause indication and for continuing the dynamic record in response to a record recovering indication in a record stopped state.

9. The thermal imaging device according to claim 1 or 2, further comprising:
the recording part for stopping the dynamic record processing in response to a pause indication;
a control holding part for holding the infrared data frame corresponding to the moment of the pause indication;
the recording part, in response to the mark indication, being capable of marking the infrared data frame.

10. The thermal imaging device according to claim 1 or 2, further comprising: a second acquiring part for acquiring other images, the recording part for associating other images with the marked thermal imaging data frame and recording the association.

11. An analyzing device comprising:
a selecting part for selecting a plurality of thermal imaging data frames;
an analyzing part for analyzing to acquire characteristic data corresponding to specified frames, based on the specified frames in the selected thermal imaging data frames;
a characteristic curve generating part for forming a characteristic curve formed by characteristic points or connected characteristic points in a characteristic curve coordinate system, based on a frame time sequence information and the corresponding characteristic data of the specified frames, and for indicating a position of a marked frame in the characteristic curve coordinate system, based on the frame time sequence information and/or characteristic data of the marked frame in the specified frames.

12. The analyzing device according to claim 11, further comprising:
a characteristic cursor display controlling part for correspondingly displaying a characteristic cursor on the characteristic curve, the x-coordinate of the coordinate system, the y-coordinate of the coordinate system, or a combination thereof;
a characteristic cursor operating part for performing locating operation of the characteristic cursor;
the characteristic cursor display controlling part for displaying the characteristic cursor at the located position, based on the locating operation of the characteristic cursor;
an information display controlling part for controlling to display information related to the thermal imaging data frame to which the position of the characteristic cursor corresponds and/or the infrared thermal image acquired by the thermal imaging data frame.

13. The analyzing device according to claim 11, further comprising:
a filtering part for filtering the selected thermal imaging data frames according to a specified filter condition, to acquire the specified frames related to the generation of the characteristic curve; the filtering part for filtering the selected thermal imaging data frames to acquire the specified frames, according to the filter condition including a sampling frame amount, a marked frame, a sampling interval, frame additional information or associated information, characteristic data time, or a combination thereof.

14. The analyzing device according to claim 13, wherein the infrared thermal image acquired by the thermal imaging data frame before or after the selected marked frame is played.

15. The analyzing device according to claim 11, wherein the identification of the marked frame is capable of being displayed on the characteristic curve.

16. A thermal image photographing method, comprising:
a photographing step for continuously photographing to acquire thermal imaging data frames;
a display controlling step for controlling to allow a display part to display a dynamic infrared thermal image acquired by the photographed thermal imaging data frame;
a recording step, in response to a dynamic record indication, for continuously recording the acquired infrared data frames, the infrared data frames being the acquired thermal imaging data frames and/or data acquired after specified processing for the acquired thermal imaging data frames;
a mark operating step for performing mark operation;
the recording step, in response to a mark indication generated by the mark operation, for recording by distinguishing the marked infrared data frame from the unmarked infrared data frames.

17. A thermal image photographing method, comprising:
an acquiring step for continuously acquiring thermal imaging data frames;
a recording step, in response to a dynamic record indication, for continuously recording acquired infrared data frames, the infrared data frames being the acquired thermal imaging data frames and/or data acquired after specified processing for the acquired thermal imaging data frames;
a marking step for giving a mark indication;
the recording step, in response to the mark indication, for recording by distinguishing the marked infrared data frame from the unmarked infrared data frames.

18. The thermal image photographing method according to claim 15 or 16, wherein the recording step is used for recording the marked infrared data frame and the unmarked infrared data frames to one dynamic thermal image document.

19. The thermal image photographing method according to claim 15 or 16, wherein the recording step is used for recording the multiple marked infrared data frames to another dynamic thermal image document.

20. An analyzing method, comprising:
a selecting step for selecting a plurality of thermal imaging data frames;
an analyzing step for analyzing to acquire characteristic data corresponding to specified frames, based on the specified frames in the selected thermal imaging data frames;
a characteristic curve generating step for forming a characteristic curve formed by characteristic points or connected characteristic points in a characteristic curve coordinate system, based on a frame time sequence information and the corresponding characteristic data of the specified frames, and for indicating a position of a marked frame in the characteristic curve coordinate system, based on the frame time sequence information and/or characteristic data of the marked frame in the specified frames.

21. The analyzing method according to claim 11, further comprising:
a characteristic cursor display controlling step for correspondingly displaying a characteristic cursor on the characteristic curve, the x-coordinate of the coordinate system, the y-coordinate of the coordinate system, or a combination thereof;
a characteristic cursor operating step for performing locating operation of the characteristic cursor;
the characteristic cursor display controlling step for displaying the characteristic cursor at the located position, based on the locating operation of the characteristic cursor;
an information display controlling step for controlling to display information related to the thermal imaging data frame to which the position of the characteristic cursor corresponds and/or the infrared thermal image acquired by the thermal imaging data frame.
